Europäisches Patentamt

European Patent Office

Office européen des brevets

(19)

(11) **EP 0 794 481 A2**

(12) **EUROPEAN PATENT APPLICATION**

(43) Date of publication:
10.09.1997 Bulletin 1997/37

(51) Int. Cl.$^6$: **G06F 1/32**

(21) Application number: 97103605.8

(22) Date of filing: 05.03.1997

(84) Designated Contracting States:
**DE FR GB**

(30) Priority: 06.03.1996 JP 49085/96

(71) Applicant:
**MITSUBISHI DENKI KABUSHIKI KAISHA
Tokyo 100 (JP)**

(72) Inventors:
• **Gouzu, Tomonobu**
**Chiyoda-ku, Tokyo 100 (JP)**

• **Asatsu, Toru**
**Chiyoda-ku, Tokyo 100 (JP)**
• **Shimura, Kazuo**
**Chiyoda-ku, Tokyo 100 (JP)**
• **Kosai, Atsushi**
**Chiyoda-ku, Tokyo 100 (JP)**
• **Kambe, Hidetoshi**
**Chiyoda-ku, Tokyo 100 (JP)**

(74) Representative: **Pfenning, Meinig & Partner
Mozartstrasse 17
80336 München (DE)**

(54) **Multitask processing system with variable clock rate for power saving**

(57) A multitask processing system which can fix clock within a system request by eliminating a problem that, because of switching of a corresponding system clock predetermined to a task being in a running state for the reduction of power consumption, the entire processing ability deteriorates if a plurality of task processing requests occur simultaneously. This multi-task processing system comprises a clock rate determining section for obtaining a system clock rate on the basis of task processing request time information depending on a task to be executed and task managing information including the number of tasks and processing contents for each task and a clock producing section for producing a clock for operating the system in accordance with clock frequency information based upon the rate determination. The clock rate determining section is equipped with a table in which a plurality of clock frequencies are set, so that the system clock rate is determined by selecting one from the plurality of set clock frequencies on the basis of a time settled from the task managing information and the task processing request time.

EP 0 794 481 A2

**Description**

BACKGROUND OF THE INVENTION

1. Field of the Invention

The present invention relates to a multitask processing system to be mounted, for example, on mobile body communication equipment such as portable telephones, and particularly to a processor system for multitask processing (pseudo multitask processing based upon time sharing), for example, a multitask processing system which can bring about power saving in such a manner that a task processing time is adjusted to conform to the lowest clock rate (system clock) allowable in the system.

2. Description of the Related Art

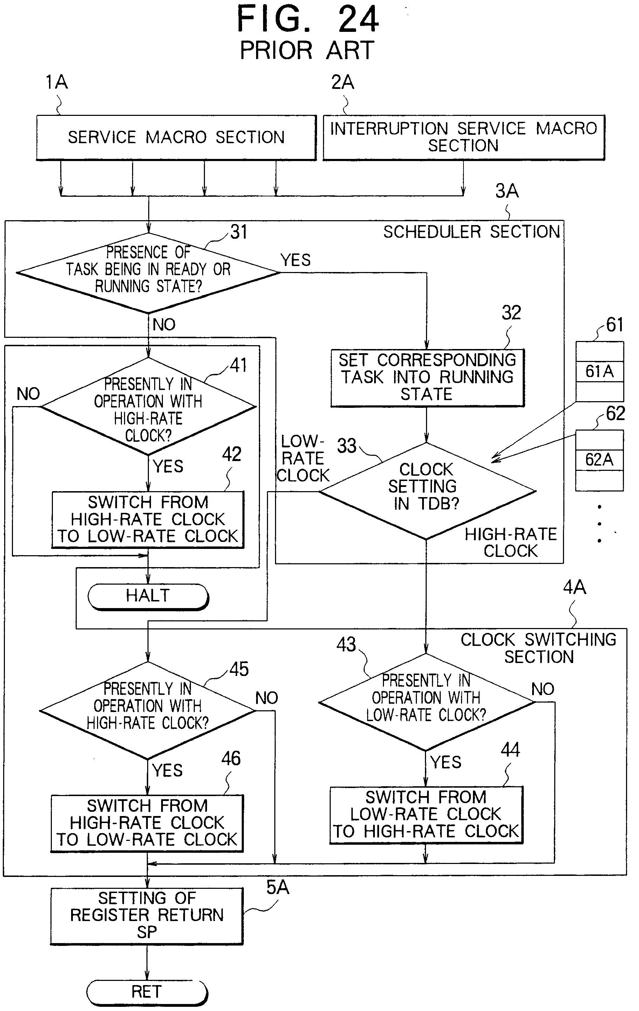

Fig. 24 is an illustration of an arrangement of a prior multitask processing system for the power saving. The feature of this prior example is that, taking into consideration the fact that a task to be executed does not always require a high-speed operation and the power saving is achievable if the operation is conducted at a rate as low as possible within the rate range allowable in that system, a mechanism is provided for registering and storing a system clock rate at every task to set the clocks on the basis of a clock registration status corresponding to a task in response to the designation of the task execution. In addition, in the case of no task to be executed, selection is made to the clocks with the lowest rate.

More specifically, for example, according to Japanese Patent Laid-Open No. 4-257010 shown in Fig. 24, a scheduler section 3A decides, at a step 31, whether or not there is a task which is currently in operation and, if present, advances to a step 33 to check a system clock designation storage sections 61, 62 in a TDB (TASK DEFINE BLOCK) or the like.

In this instance, the system clock designation storage section 61 retains high-rate clock information 61A corresponding to some task, whereas the system clock designation storage section 62 holds low-rate clock information 62A corresponding to a different task. If the task being executed needs a high-speed operation in the TDB, the high-rate clock information 61A is read out at the step 33, and a clock switching section 4A checks the present clock at a step 43 and, if needed, switches over the clock to a high-rate clock at a step 44.

If a low-speed operation is needed in the TDB, in the same way the clock switching section 4A changes over to a low-rate clock, if required, at a step 46. On the other hand, if no task to be taken is present, it sets the clock to a low-rate clock at a step 42 to produce an HALT condition for the power saving.

As mentioned above, the low-rate clock is taken at other than task execution, and even at the task execution the low-rate clock is employed at as many cases as possible through the TDB storing the corresponding clocks, thus accomplishing the power saving.

According to the prior multitask processing system thus arranged, the system clock information is stored at every task, while the operation is merely conducted such that the corresponding clocks are set in response to the processing request for a plurality of tasks and is not always completed within the time the user or the system requires, i.e. , within the time limited, for example, in mobile body communication equipment. Besides, difficulty is experienced to guarantee the power saving for the entire task processing time.

SUMMARY OF THE INVENTION

Accordingly, the present invention has been developed with a view to eliminating the above-mentioned problems, and it is an object of the present invention to provide a multitask processing system which is capable of taking an optimal processing time as well as achieving the power saving taking into consideration the request time and execution time allowable in the system, irrespective of the execution request for a plurality of tasks.

A multitask processing system according to this invention comprises task request means for issuing a task request when a task to be executed arises in the system and further for communicating task processing request time information depending on a task to be executed, task managing means for controlling processing order of tasks a CPU processes and further for issuing task managing information, clock rate determining means for determining a low-rate and optimal clock frequency on the basis of the task processing request time information and the task managing information, and clock producing means for producing a clock signal corresponding to the clock frequency and further for supplying it to the CPU.

Furthermore, a multitask processing system according to this invention comprises task request means for issuing a task request when a task to be executed arises in the system and further for communicating task processing request time information depending on a task to be executed, task managing means for controlling processing order of tasks a CPU processes and further for issuing task managing information, clock rate determining means for storing a request time for each task in a request time register on the basis of the task processing request time information and the task managing information, a supply voltage table for storing a task execution time in relation to a supply voltage and a system clock at every task, and supply voltage control means for controlling a supply voltage in the system, wherein in response to issue of the task request the task managing means makes a change request for change of the supply voltage in the system toward the supply voltage control means referring to the request time register, the supply voltage table and a stable time taken until the supply voltage stably takes a given voltage value.

Still further, a multitask processing system according to this invention comprises task request means for issuing a task request when a task to be executed arises in the system, task managing means for controlling processing order of tasks a CPU processes and further for issuing task managing information, communication control means for controlling a communication resource and further for issuing communication state information, clock rate determining means for determining a low-rate and optimal clock frequency on the basis of the communication state information, and clock producing means for producing a clock signal corresponding to the clock frequency and further for supplying it to the CPU.

BRIEF DESCRIPTION OF THE DRAWINGS

Fig. 1 is an illustration of an arrangement of a multitask processing system according to a first embodiment of the present invention;
Fig. 2 is an illustration of a detailed arrangement of clock rate determining means shown in Fig. 1;
Fig. 3 is a flow chart showing an operation of the clock rate determining means of Fig. 2;
Fig. 4 is an illustration of an arrangement of a multitask processing system according to a second embodiment of this invention;
Fig. 5 is a flow chart showing an operation to be conducted in the multitask processing system of Fig. 4 according to the second embodiment when a task to be executed occurs;
Fig. 6 is a flow chart showing an operation of the Fig. 4 multitask processing system according to the second embodiment at the occurrence of regular interruption processing;
Fig. 7 is a flow chart showing an operation of the Fig. 4 multitask processing system according to the second embodiment at the completion of task processing under execution;
Fig. 8 is a flow chart showing an operation of the Fig. 4 multitask processing system according to the second embodiment, taken for when a CPU uses a resource through task processing being in execution;
Fig. 9 is a flow chart showing an operation of the Fig. 4 multitask processing system according to the second embodiment at the notification of the processing completion of a task;
Fig. 10 shows an arrangement of a multitask processing system according to a third embodiment of this invention;
Fig. 11 is a flow chart showing an operation of the Fig. 10 multitask processing system according to the third embodiment at the occurrence of a task being executed;
Fig. 12 is a flow chart showing an operation of the Fig. 10 multitask processing system according to the third embodiment, taken for when a CPU uses a resource;
Fig. 13 is a flow chart showing an operation of the Fig. 10 multitask processing system according to the third embodiment at the notification of the processing completion of a task;
Fig. 14 shows an arrangement of a multitask processing system according to a fourth embodiment of this invention;
Fig. 15 is a flow chart showing an operation of the Fig. 14 multitask processing system according to the fourth embodiment, taken for when the user designates a rate of UI;
Fig. 16 is a flow chart showing an operation of the Fig. 14 multitask processing system according to the fourth embodiment, taken for when a clock frequency under execution varies;
Fig. 17 is a flow chart showing an operation of the Fig. 14 multitask processing system according to the fourth embodiment, taken for when clock frequency information is communicated to UI rate calculating means;
Fig. 18 is a flow chart showing a clock rate determining operation in the Fig. 14 multitask processing system according to the fourth embodiment;
Fig. 19 illustrates an arrangement of a multitask processing system according to a fifth embodiment of this invention;
Fig. 20 is a flow chart showing an operation of the Fig. 19 multitask processing system according to the fifth embodiment, taken for when a task to be executed arises;
Fig. 21 illustrates an arrangement of a multitask processing system according to a sixth embodiment of this invention;
Fig. 22 illustrates a detailed arrangement of clock rate determining means shown in Fig. 21;
Fig. 23 is a flow chart showing an operation of the clock rate determining means in the Fig. 21 multitask processing system according to the sixth embodiment when being in a communication condition; and
Fig. 24 is an illustration of an arrangement of a prior multitask processing system.

## DESCRIPTION OF THE PREFERRED EMBODIMENTS

First Embodiment

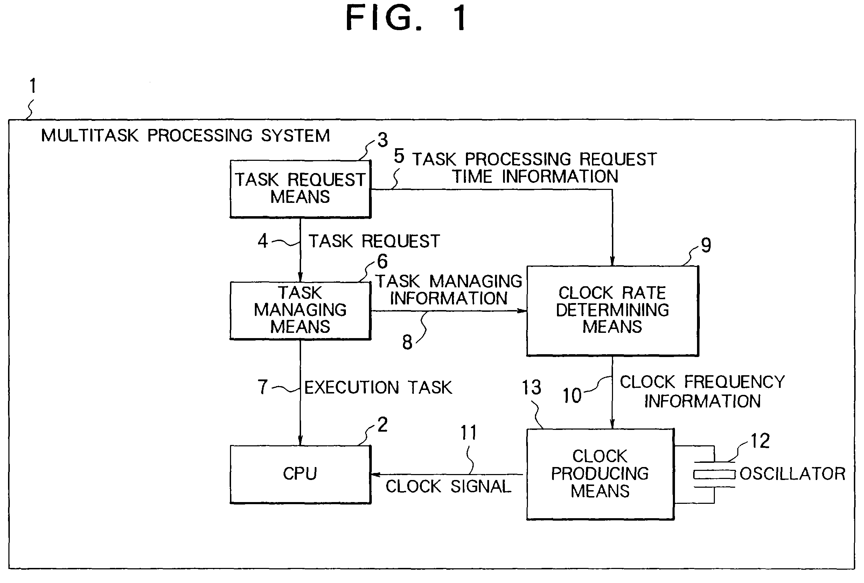

Fig. 1 is an illustration of a basic arrangement of a multitask processing system according to a first embodiment of the present invention. In the illustration, numeral 1 represents a multitask processing system, numeral 2 designates a CPU which is capable of multitask, numeral 3 denotes task request means for making a request for a task the CPU 2 performs and a processing time, numeral 4 depicts a task request issued from the task request means 3, numeral 5 stands for task processing request time information coming from the task request means 3, numeral 6 indicates task managing means for managing the processing order of tasks the CPU 2 carries out, numeral 7 shows an execution task the CPU 2 accomplishes, numeral 8 signifies task managing information issued from the task managing means 6, numeral 9 is indicative of a clock rate determining means for determining a clock rate on the basis of the task processing request time information 5 and the task managing information 8, numeral 10 is representative of a clock frequency information obtainable from the clock rate determining means 9, numeral 11 expresses a clock signal fed to the CPU 2, numeral 12 describes an oscillator (vibrator) for generating a basic clock for the clock signal 11, and numeral 13 denotes clock producing means for producing the clock signal 11 on the basis of the basic clock from the oscillator 12.

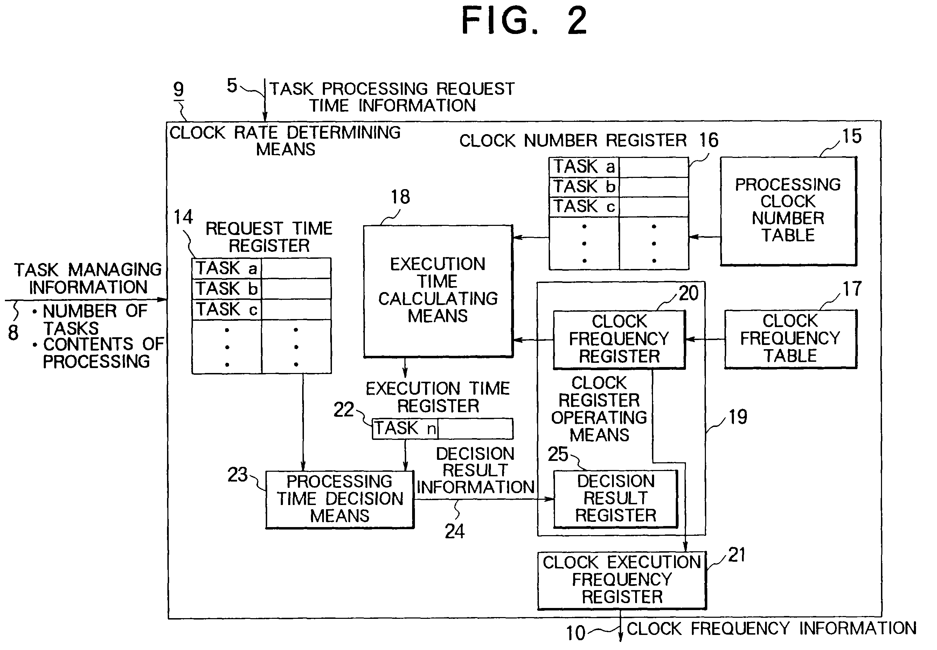

Fig. 2 is a block diagram showing a detailed arrangement of the clock rate determining means 9. In Fig. 2, numeral 14 represents a request time register for storing the task processing request time information 5, numeral 15 designates a processing clock number table retaining the numbers of processing clocks (for example, 50, 100, 200, ...) written for all the tasks to be processed in the multitask processing system 1, numeral 16 denotes a clock number register for storing the numbers of processing clocks (for example, 500, 1000, 2000, ...) for each task obtained from the task managing information 8 referring to the processing clock number table 15, numeral 17 depicts a clock frequency table retaining written clock frequencies (for example, 10 MHz, 12.5 MHz, 20 MHz, ...) the clock producing means 13 can produce, numeral 18 shows execution time calculating means for calculating an execution time for a task, numeral 19 indicates clock register operating means for referring to the clock frequency table 17 to operate the execution time calculating means 18 and the clock frequency value for use in the clock producing means 13, numeral 20 stands for a clock frequency register for storing clock frequency data to be used in the execution time calculating means 18, numeral 21 represents a clock execution frequency register for storing frequency information to be outputted as the clock frequency information 10, numeral 22 denotes an execution time register for storing an execution time for each task obtained through the execution time calculating means 18, numeral 23 depicts processing time decision means for making a decision on comparison between a request time for the corresponding task stored in the request time register 14 and an execution time for a task stored in the execution time register 22, numeral 24 shows decision result information obtained by the processing time decision means 23, and numeral 25 indicates a decision result register for storing the decision result information 24.

Secondly, with reference to Figs. 1 and 2, a description will be taken hereinbelow of an operation of the system according to this embodiment.

In the multitask processing system 1, when being in a task waiting condition, the clock producing means 13 produces an indication clock through the use of the oscillator 12 in a manner that the initial value of the clock frequency information 10 stored in the clock frequency register 20 and the clock execution frequency register 21 of the clock rate determining means 9 is treated as an indication value, and the indication clock is inputted as the clock signal 11 to the CPU 2. The system operates on the basis of this produced clock.

In cases where a task arises, the task request means 3 sends the task request 4 to the task managing means 6 and further forwards the task processing request time information 5 to the clock rate determining means 9. When the task obtained by the task request 4 is only one in number, the task managing means 6 sends that task as the execution task 7 to the CPU 2. On the other hand, if a plurality of tasks are attained by the task request 4, it supplies the CPU 2 with the respective tasks as the execution tasks 7 in order within a predetermined period of time. At this time, when the task to be processed occurs or when the task is completed, that is, the number of tasks varies, the task managing means 6 delivers the task managing information 8 including the number of tasks to be executed and the processing contents for the respective tasks to the clock rate determining means 9 each time.

In the clock rate determining means 9, the task processing request time information 5 (for example, the time needed for the limitation to the communication in a mobile body communication equipment) specified by the user or determined in advance by the system request at every task is stored in the request time register 14 at every task. Further, the numbers of clocks are summed referring to the processing clock number table 15 on the basis of the task processing contents obtained from the task managing information 8, and the number of clocks to be executed at every task is stored in the clock number register 16. The execution time calculating means 18 calculates the task execution time at a single-task of the respective tasks in accordance with the following equation 1 on the basis of the "number of processing clocks" for each task stored in the clock number register 16 and the "clock frequency" stored in the clock frequency register 20.

$$\text{task execution time at single-task} = \text{number of processing clocks for each task/clock frequency} \qquad \text{(Equation 1)}$$

Subsequently, the processing time at multitask for the respective tasks, i.e., the task execution time, is calculated on the basis of the number of tasks obtained from the task managing information 8 and the cycle time (= time slot number of tasks) at multitask obtained from the time slot at the time of multitask processing, and stored in the execution time register 22.

$$\text{task execution time at single-task / time slot time} = \text{quotient ... remainder} \qquad \text{(Equation 2)}$$

$$\text{task execution time} = \text{cycle time} * \text{quotient} + \text{remainder} \qquad \text{(Equation 3)}$$

The processing time decision means 23 makes a decision on comparison between the request time for the corresponding task stored in the request time register 14 and the execution time for the corresponding task stored in the execution time register 22, and sends the decision result as the decision result information 24 to the decision result register 25 of the clock register operating means 19.

The clock register operating means 19 delivers as the clock frequency information 10 the data stored in the clock execution frequency register 21 to the clock producing means 13 in the case that confirmation is made from the contents of the decision result register 25 such that the execution times for all the tasks are shorter than the request times for all the tasks (that is, each execution time calculated at every task is shorter than each request time at every corresponding task) and the clock frequency data stored in the clock execution frequency register 21 is the lowest-rate clock frequency satisfying the respective request times for all the tasks.

The clock producing means 13 produces a clock with a frequency corresponding to the clock frequency information 10 through the use of the oscillator 12 and sends it as the clock signal 11 to the CPU 2. The CPU 2 conducts processing at a frequency corresponding to the necessary lowest rate, so that the multitask processing system 1 consumes the necessary minimum power. For the power saving, in the system the task processing request time information is set to be as long as possible while short task processing request time information is set only for the task requiring quick processing.

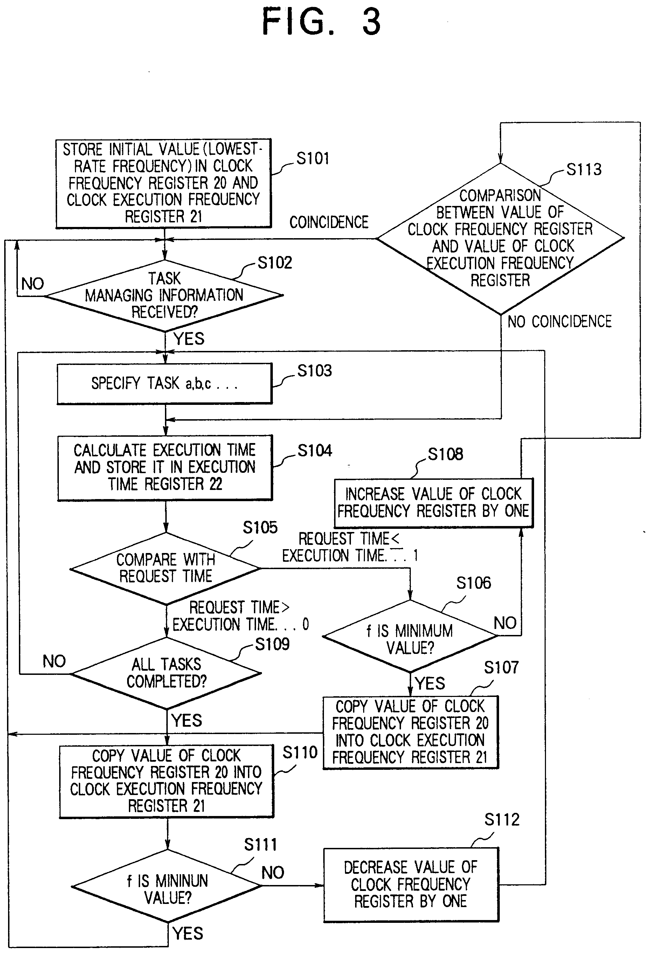

Fig. 3 is a flow chart showing an operation for the determination of the clock rate in the clock rate determining means 9. The clock rate determining operation will be described with reference to Fig. 3.

The lowest-rate clock frequency, of the clock frequencies written in the clock frequency table 17, which allows the operation of this multitask processing system 1 is stored as the initial value in the clock frequency register 20 and the clock execution frequency register 21 (step S101).

In cases where the task processing request time information, together with the task managing information 8, is communicated to the clock rate determining means 9, as mentioned before the number of processing clocks and the request time are stored in the clock number register 16 and the request time register 14 at every task. As the initial condition after the turning-on of the power supply this multitask processing system 1 waits for the occurrence of the task request 4 at the lowest-rate clock frequency (step S102).

On arrival of the task managing information 8, the clock rate determining means 9 specifies a task a for which the execution time is calculated (S103) ("step S" will be referred hereinafter to as S), and the execution time for the task a is calculated in accordance with the equations 1, 2 and 3 on the basis of the "number of processing clocks" for the task a in the clock number register 16, the "clock frequency" stored in the clock frequency register 20, the total number of tasks to be processed, and others, with the calculated execution time being stored in the execution time register 22 (S104).

Furthermore, the processing time decision means 23 decides the relationship in magnitude between the execution time data for the task a stored in the execution time register 22 and the request time data for the task a stored in the request time register 14 to gain the following decision result (S105).

$$\text{request time} > \text{execution time} \cdot \cdot \cdot 0$$

$$\text{request time} \leq \text{execution time} \cdot \cdot \cdot 1$$

For example, in the case of request time = 400 $\mu$s, number of processing clocks = 1000, clock frequency = 10 MHz, total number of tasks = 5, and time slot time at multitask = 10 $\mu$s in terms of the task a, using the equations 1, 2 and 3, the above-mentioned concrete values are substituted thereinto to obtain the following equations 4, 5 and 6 which in turn, provide the following equation 7.

$$1000/10 \text{ MHz} = 100 \ \mu\text{s} \qquad \text{(Equation 4)}$$

$$100 \ \mu\text{s}/10 \ \mu\text{s} = 10 \text{ ... remainder } 0 \qquad \text{(Equation 5)}$$

$$10 \ \mu s * 5 * 10 + 0 = 500 \ \mu s \qquad\qquad \text{(Equation 6)}$$

$$400 \ \mu s \ \text{(request time)} < 500 \ \mu s \ \text{(execution time)} \qquad\qquad \text{(Equation 7)}$$

In the case that the decision result assumes the equation 7, the processing by the CPU 2 does not satisfy the time required for the task a.

Still further, check is made whether or not the frequency data (f) in the clock frequency register 20 is the highest-rate frequency (maximum value) of the frequency data written in the clock frequency table 17 (S106).

The case of the highest-rate frequency signifies that the task processing request time information 5 and the number of tasks to be processed exceed the ability of this multitask processing system 1, the frequency data stored in the clock frequency register 20 is copied into the clock execution frequency register 21 (S107) and is then outputted as the clock frequency information 10 to the clock producing means 13. Thus, in this multitask processing system 1 the CPU 2 operates on the highest-rate clock signal 11 produced in the clock producing means 1.

On the other hand, in the case that the frequency data stored in the clock frequency register 20 does not correspond to the highest-rate frequency (the maximum value), referring to the clock frequency table 17 the frequency data to be stored in the clock frequency register 20 is raised in rate by one rank (S108).

After this, comparison is made between the frequency data stored in the clock frequency register 20 and the frequency data stored in the clock execution frequency register 21 (S113).

When both the data are equal to each other, the frequency data stored in the clock execution frequency register 21 is the optimal value which can satisfy the request time, thus coming into the state of waiting for the task managing information 8 (S102).

On the other hand, if the value of the clock frequency register 20 and the value of the clock execution frequency register 21 are not in the equal relation to each other, that is, when the value of the clock execution frequency register 21 is smaller than the other, the calculation of the execution time (S104) and the comparison with the request time (S105) are again made. This operation is repeatedly conducted until the decision result = 0.

In the case of the decision result = 0, check is made whether or not the decision is made for all the tasks to be processed (S109).

In the case that the task to be processed is only the task a, the decision result = 0 means the confirmation that the execution time is shorter than the request time, and hence the frequency data stored in the clock frequency register 20 is copied into the clock execution frequency register 21 (S110). The data stored in the clock execution frequency register 21 is outputted as the clock frequency information 10 to the clock producing means 13.

In the case that the task (a, b, c ...) to be processed still remains (S109), the above-mentioned operations (S103), (S104), (S105), (S106), (S107), (S108) and (S113) are conducted for all the tasks. When the decision result = 0 is attained in terms of all the tasks, this signifies the confirmation that the respective execution times for all the tasks are shorter than the respective corresponding request times, and therefore the frequency data stored in the clock frequency register 20 is copied into the clock execution frequency register 21 (S110). The data stored in the clock execution frequency register 21 is outputted as the clock frequency information 10 to the clock producing means 13.

Following this, the clock rate determining means 9 refers to the clock frequency table 17 to check whether or not the frequency data stored in the clock frequency register 20 is the lowest rate (the minimum value) (S111). If not the lowest rate, the frequency data to be stored in the clock frequency register 20 is modified to the frequency data lower by one rank (S112).

Furthermore, in the same way as mentioned above, the calculation of the execution time and the comparison with the request time are made in terms of all the tasks. At this time, if the execution time exceeds the request time, the value stored in the clock execution frequency register 21 shows the optimal clock frequency for the task request 4. When the value of the clock frequency register 20 is raised by one rank (S108), the value of the clock frequency register 20 becomes equal to the value of the clock execution frequency register 21, and through the comparison between the values of the clock frequency register 20 and the clock execution frequency register 21 (S113), the operation gets into the task managing information 8 waiting condition (S102).

In the case that at S111 the frequency data stored in the clock frequency register 20 is the lowest-rate clock frequency at which this multitask processing system 1 can operate, the clock rate determining means 9 completes a series of operations and waits for the arrival of the next task managing information 8.

Through the above-described operations, the clock rate determining means 9 supplies the clock producing means 13 with the lowest-rate clock frequency information 10 satisfying all the corresponding request times in terms of all the tasks to be processed (if one task processing is completed, all the tasks to be processed other than that task), with the clock producing means 13 supplying the necessary lowest-rate clock signal 11 to the CPU 2 which in turn, executes the task processing at the necessary lowest rate, with the result that the multitask processing system 1 according to this invention consumes the necessary minimum power.

That is, the multitask processing system according to this first embodiment achieves the power saving of the entire system by employing the low rate and by selecting the optimal system clock.

Second Embodiment

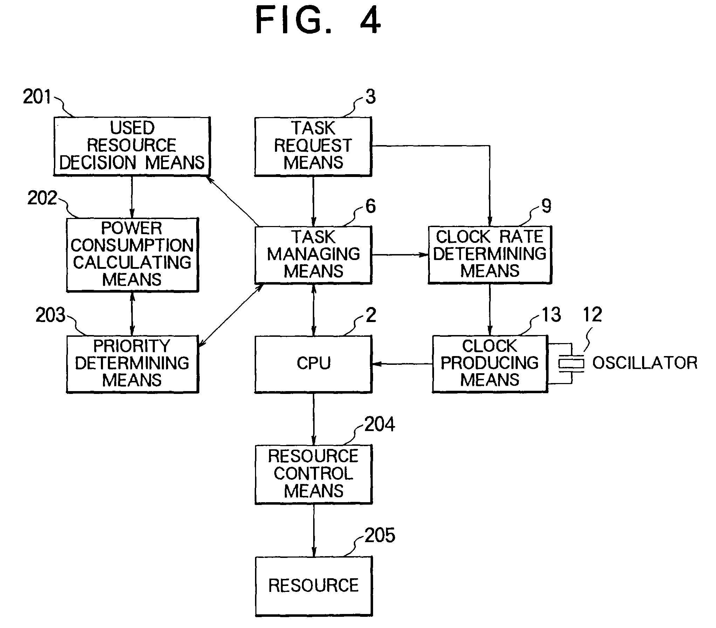

Referring to Fig. 4 a description will be made hereinbelow of an arrangement of a multitask processing system according to a second embodiment of the present invention. Fig. 4 shows an arrangement of a multitask processing system including a plurality of power-consuming resources (peripheral devices such as an LCD panel, a modem, a speaker, a microphone) , which is capable of accomplishing the power saving. This multitask processing system has some means in addition to the arrangement of the multitask processing system according to the first embodiment.

In Fig. 4, numeral 201 represents a used resource decision means for deciding a resource the task uses in accordance with the task processing contents, numeral 202 designates power consumption calculating means for calculating power consumption of a resource, and numeral 203 denotes priority determining means for determining the order of priority of (prioritizing) tasks on the basis of the power consumption information on a resource. Further, numeral 204 depicts resource control means for controlling a group of resources, and numeral 205 indicates a group of resources such as an LCD panel, a modem, a speaker, a microphone, i.e., a plurality of resources, to be controlled by the resource control means 204. These means are newly added, whereas the CPU 2, the task request means 3, the task managing means 6, the clock rate determining 9, the oscillator 12 and the clock producing means 13 are the same as those of the above-described first embodiment.

Secondly, a description will be made hereinbelow of an operation thereof. The description begins with symbols which will be in use. For example, let it be assumed that the system includes the following resources:

{an LCD, a hard disk, a CD-ROM, a printer, a modem}

Furthermore, character i is used as a task identification number, and let it be assumed that the total number of tasks m = 3 and the tasks i (i = 1, 2, 3) respectively uses the following resources. In this case, these resources are for the purpose of describing the following symbols but not realizing this embodiment.

task 1 : LCD, hard disk, printer
task 2 : hard disk
task 3 : LCD, CD-ROM, printer, modem

The next symbols signify the following meanings.

$n(i)$ denotes the number of resources to be used for the task i. Accordingly, $n(1) = 3$, $n(2) = 1$ and $n(3) = 4$. Assuming that character j represents an identification number of a resource to be used for the same task, a resource $(i, j)$ represents the jth resource used for the task i. However, if it is possible to identify the resource, the order of the resources belonging to the same task is free. The respective above-mentioned resources are expressed as follows.

resource $(1, 1)$ = LCD, resource $(1, 2)$ = hard disk, resource $(1, 3)$ = printer;
resource $(2, 1)$ = hard disk; and
resource $(3, 1)$ = LCD, resource $(3, 2)$ = CD-ROM, resource $(3, 3)$ = printer, resource $(3, 4)$ = modem
$[1 .. n(i)]$ denotes a set of identification numbers of the resources from 1 to $n(i)$ to be used for the task i.
$[1 .. n(1)] = \{1, 2, 3\}$;
$[1 .. n(2)] = \{1\}$; and
$[1 .. n(3)] = \{1, 2, 3, 4\}$

Furthermore, resource $(i, [1 .. n(i)])$ represents a set of resources used for the task i. In the above-mentioned concrete example, they are as follows.

resource $(1, [1 .. n(1)])$
$= \{$resource $(1, 1)$, resource $(1, 2)$, resource $(1, 3)\}$
$= \{$LCD, hard disk, printer$\}$
resource $(2, [1 .. n(2)])$
$= \{$resource $(2, 1)\}$
$= \{$hard disk$\}$
resource $(3, [1 .. n(3)])$
$= \{$resource $(3, 1)$, resource $(3, 2)$, resource $(3, 3)$, resource $(3, 4)\}$
$= \{$LCD, CD-ROM, printer, modem$\}$

Still further, resource $(i = [1 .. m], [1 .. n(i)])$ describes a set of resources to be used for all the tasks. In the case of the above-mentioned concrete example, they are as follows.

resource $(i = [1 .. m], [1 .. n(i)])$
$=$ resource $(1, [1 .. n(1)])$ + resource $(2, [1 .. n(2)])$ + resource $(3, [1 .. n(3)])$

= {{LCD, hard disk, printer}, {hard disk}, {LCD, CD-ROM, printer, modem}}

Thus, the power consumption (resource (i, j)) denotes the power consumption of the jth resource for the task i, and the power consumption (resource (i = [1 .. m], [1 .. n(i)]) signifies the power consumption of each of the resources in the above-mentioned whole list.

power P(i) of task i = $\Sigma$ power consumption (resource (i, j)) ($\Sigma$ represents the resources up to n(i) when j = 1), and in the above-mentioned concrete example, they are as follows.

P(1) = power consumption (resource (1, 1)) + power consumption (resource 1, 2)) + power consumption (resource (1, 3))
= power consumption of LCD + power consumption of hard disk + power consumption of printer;
P(2) = power consumption of hard disk; and
P(3) = power consumption of LCD + power consumption of CD-ROM + power consumption of printer + power consumption of modem

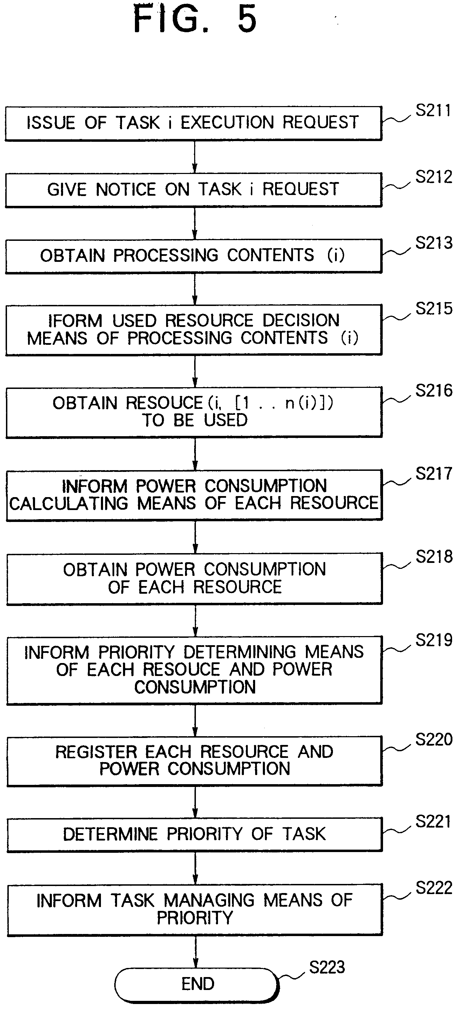

Fig. 5 is a flow chart showing an operation to be taken for when a task to be executed arises in the multitask processing system. Referring to this figure, a description will be taken hereinbelow of an operation taken for when the task i to be executed occurs in the multitask processing system (S211).

The task request means 3 informs the task managing means 6 of the task i request (S212).

Subsequently, the task managing means 6 informed gets the processing contents (i) for the task i from the information on the task i it retains (S213). In this case, the task i processing contents (i) are the same as the task processing contents included in the task managing information 8 in the above-described first embodiment.

Furthermore, the processing contents (i) is communicated to the used resource decision means 201 (S215).

The used resource decision means 201 makes out a list of the resources used on the basis of the processing contents (i) to obtain the resource (i, [1 .. n(i)]) (S216). There is a possibility of using the same resources as those for the other tasks.

Moreover, the used resource decision means 201 informs the power consumption calculating means 202 of the resource (i, [1 .. n(i)]) (S217).

Furthermore, the power consumption calculating means 202 measures and obtains the respective power consumption's (resource (i, [1 .. n(i)]) of the respective resources (i, [1 .. n(i)]) (S218).

In addition, the power consumption calculating means 202 informs the priority determining means 203 of the resource (i, [1 .. n(i)]) and the power consumption (resource (i, [1 .. n(i)]) (S219).

After this, the priority determining means 203 registers the resource (i, [1 .. n(i)]) and the power consumption (resource (i, [1 .. n(i)]) as the resource information for the task i (S220).

In addition, the priority determining means 203 determines the priority order (priority level) of the respective tasks in the order of decreasing the value of the task i power P(i) according to the following equation 8 on the basis of the resources (i = [1 ... m] , [1 ... n(i)] and the respective power consumption (resource (i, [1 .. m], [1 .. n(i)]) for the respective tasks (S221).

$$\text{power P(i) for task i} = \Sigma \text{ power consumption (resource (i, j))} \qquad \text{(Equation 8)}$$

($\Sigma$ denotes the resources up to n(i) when j = 1)

Moreover, the priority determining means 203 informs the task managing means 6 of the determined priority order for the respective tasks (S222), following up with the termination of the operation (S223). In this case, the priority order shows the order of processing.

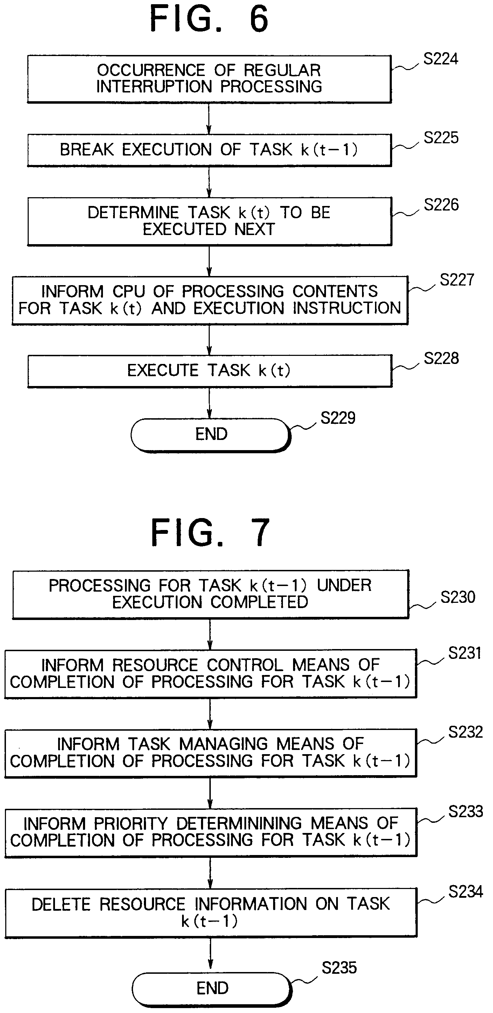

Fig. 6 is a flow chart showing an operation taken for when a regular interruption processing for switching of tasks arises in the multitask processing system. Referring to this drawing, a description will be taken hereinbelow of an operation in the case that a periodical interruption processing for switching of tasks occurs in the multitask processing system (S224).

In the following description, k(t-1) and k(t) denote task identification numbers, respectively, and a task k(t-1) and a task k(t) are different from each other.

The task managing means 6 discontinues the task k(t-1) under execution when a regular interruption processing occurs (S225).

Furthermore, the task managing means 6 determines the task k(t) to be executed next, on the basis of the priority order of the tasks based upon the resource power consumption (S226).

In addition, the task managing means 6 informs the CPU 2 of the processing contents of the task k(t) to be executed and the execution instruction (S227).

The CPU 2 carries out that task k(t) (S228), thereafter terminating the processing (S229).

Fig. 7 is a flow chart showing an operation (the processing for deleting the information on the completed task) taken for when the task k(t-1) under execution is completed. Referring to this drawing, a description will be made of an operation taken at the completion of the processing of the task k(t-1) under execution (S230).

The CPU 2 informs the resource control means 204 of the completion of the processing for the task k(t-1) (S231).

In addition, the CPU 2 also informs the task managing means 6 of the completion of the processing for the task k(t-1) (S232).

Furthermore, the task managing means 6 communicates of the completion of the processing for the task k(t-1) to the priority determining means 203 (S233).

The priority determining means 203 deletes the resource information on the task k(t-1) (S234), thus terminating the processing (S235).

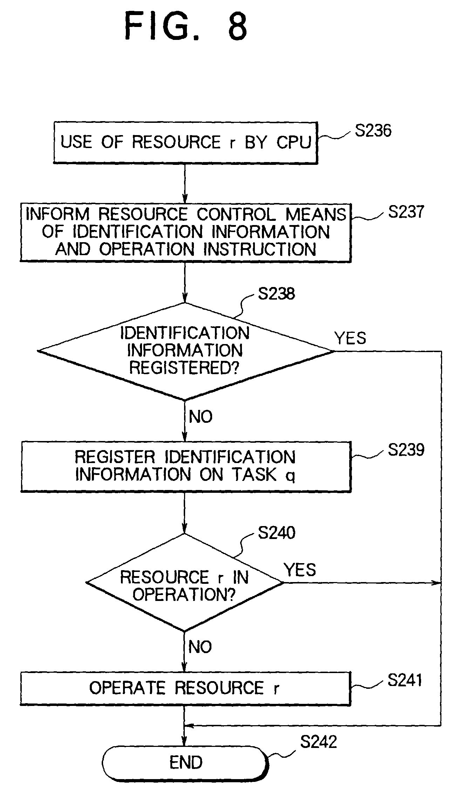

Fig. 8 is a flow chart showing an operation taken for when the CPU uses the resource r in the processing for a task q under execution. Referring to this drawing, a description will be taken hereinbelow of an operation in the case that the CPU uses the resource r in the processing for the task q under execution (S236). In this case, r represents a resource identification number, and the resource r is one of the resource group 205.

The CPU 2 informs the resource control means 204 of task q identification information (such as a task number for identifying the task) and an operation instruction on the resource r (S237).

Subsequently, the resource control means 204 decides whether that task q identification information is registered or not (S238), and if already registered, the processing comes to an end (S242).

Otherwise, the resource control means 204 records the task q identification information (S239).

Furthermore, the resource control means 204 decides whether or not the resource r is in operation (S240), and if being in operation, the processing comes to an end (S242).

If not, the resource control means 204 places the resource r into operation (S241), before finishing the processing (S242).

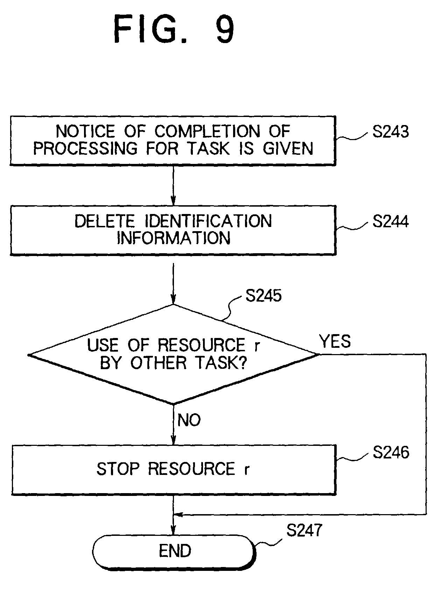

Fig. 9 is a flow chart showing an operation (the processing for deleting the information about the completed task q as well as the case of Fig. 7) taken for when the CPU 2 informs the resource control means 204 of the completion of the processing for the task q. Referring to this drawing, a description will be made hereinbelow of an operation taken at the notice of the task q processing completion from the CPU 2 to the resource control means 204 (S243).

The resource control means 204 deletes the identification information on the task q processing-completed (S244).

Furthermore, the resource control means 204 decides whether or not the same resource r is in use by the other tasks (S245), and if used, the processing comes to an end (S247).

Otherwise, the resource control means 204 stops the resource r (S246), then terminating the processing (S247).

According to this second embodiment, the order of priority of the tasks requiring a large power consumption is raised so that the tasks are preferentially executed to shorten the processing time for the tasks needing a large power consumption, with the result that the power consumption of the system lessens.

Incidentally, although in this second embodiment the power consumption of each resource is measured in S218 of Fig. 5, it is also appropriate that the power consumption of the respective resources are previously prepared as fixed values in the form of a table, and that table is referred to for the power consumption.

Furthermore, although the order of priority of the respective tasks is determined in the order of decreasing power P in S221 of Fig. 5, taking into consideration the fact that the power consumption is reducible in such a manner as to complete the task involving a large power consumption for a short time or execute the tasks using the same resource in parallel, it is also possible that through the use of a different well-known means the processing order of the respective tasks is determined so that the power consumption comes to a minimum. For example, if a plurality of tasks take the same resource, the parallel executions thereof can shorten the processing time, thereby lessening the power consumption. When the task using a resource of a large power consumption is intensively executed, finally the task processing time can be shortened to reduce the power consumption.

For example, let it be assumed that there reside a 10 minute task A using an LCD panel as a resource and a 10 minute task B not using resources at all. At this time, the total time for the multitask processing is 10 minutes + 10 minutes = 20 minutes, and the power supply for the LCD panel is in the ON state for 20 minutes. On the other hand, when preferentially processing the task A, the total time for the multitask processing is 10 minutes + 10 minutes = 20 minutes as well as the above case, whereas the power supply for the LCD panel is in the ON state for only 10 minutes because of first preferentially processing the task A, which time is half the time taken in the above case.

According to this second embodiment, even if the tasks cause the difference between the power consumption, it is possible to appropriately execute the tasks and to use the multitask processing system for a longer period of time owing to the reduction of the power consumption.

In addition, according to this second embodiment, it is possible to accomplish the power saving due to the necessary lowest rate system clock and the power saving due to the prioritization based upon the power consumption of the resource 205 in the multitask processing.

Third Embodiment

A description will be made hereinbelow of a different arrangement which is capable of achieving and attaining the completely same object and effects as those of the system according to the second embodiment. That is, task information is given from the resource control means 204 to prioritize the task executions.

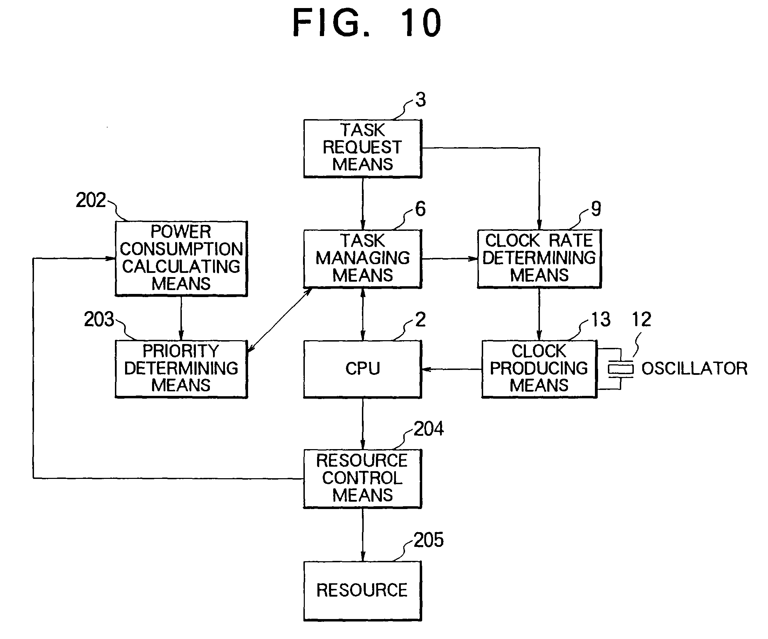

Fig. 10 is an illustration of an arrangement of a multitask processing system having a plurality of resources consuming powers according to a third embodiment of the present invention, which is capable of achieving the power saving. This multitask processing system has further means in addition to the arrangement of the multitask processing system according to the first embodiment.

In Fig. 10, the difference from the second embodiment is the way to give the resource information to the power consumption calculating means 202, and the priority determining means 203, the resource control means 204 and the resource 205 are the same as the corresponding components in the above-described second embodiment. The other components are the same as those in the above-mentioned first embodiment.

Secondly, a description will be made hereinbelow of an operation thereof.

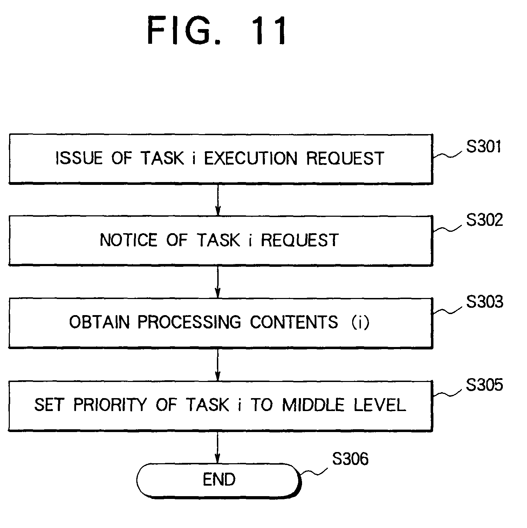

Fig. 11 is a flow chart showing an operation taken for when a task to be executed occurs in the multitask processing system. Referring to this drawing, a description will be taken of an operation taken for when a task i to be processed occurs in the multitask processing system (S301).

First, the task request means 3 informs the task managing means 6 of the task i request (S302).

On receiving that notice, the task managing means 6 obtains the processing contents (i) for the task i from the task i information (S303).

Subsequently, the task managing means 6 sets the priority of the task i to a middle level (S305), and then the operation comes to an end (S306).

Although at the above-mentioned S305 the task managing means 6 sets the priority of the task i to a middle level, in this case it does not have a particular meaning, and if other factors reside, it is possible to set the priority thereof to an adequate level taking the other factors into consideration.

The operation taken for when the regular interruption processing occurs in the multitask processing system for the purpose of switching the task (S224) is the same as that of Fig. 6.

In addition, the operation taken for when the processing for the task k(t-1) under execution is completed (S230) is the same as that of Fig. 7.

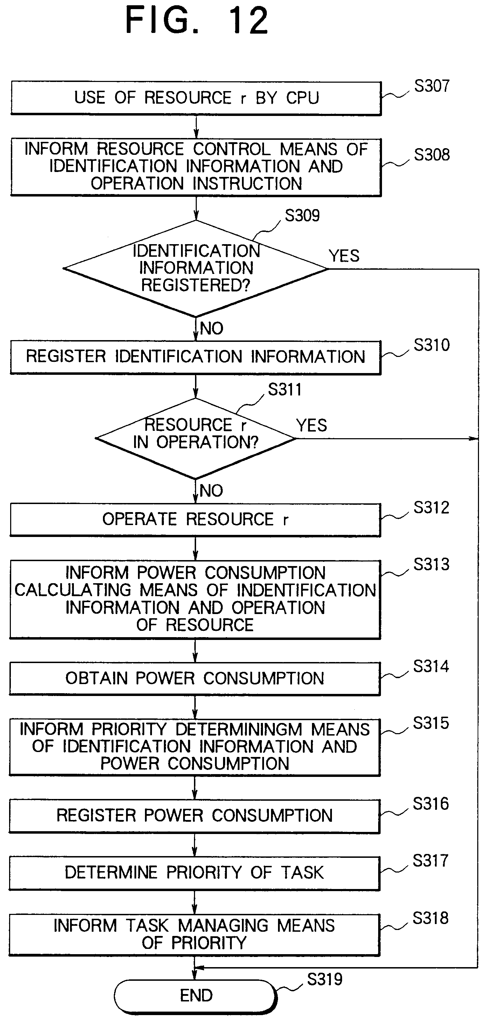

Fig. 12 is a flow chart showing an operation taken for when the CPU uses the resource r for the processing for the task q under execution. Referring to this drawing, a description will be made of an operation taken for when the CPU uses the resource r for the processing for the task q under execution (S307).

The CPU 2 informs the resource control means 204 of identification information on the task q and an operation instruction on the resource r (S308).

Subsequently, the resource control means 204 checks whether the task q identification information is registered or not (S309), and if already registered, the operation comes to an end (S319).

If not, the resource control means 204 registers the task q identification information (S310).

Following this, the resource control means 204 decides whether or not the resource r is in operation (S311), and if already in the operation, the operation terminates (S319).

Otherwise, the resource control means 204 places the resource into operation (S312) and communicates the identification information on the task q and the operation information on the resource r to the power consumption calculating means 202 (S313).

Then, the power consumption calculating means 202 measures and attains the power consumption of the resource r (S314).

Furthermore, the power consumption calculating means 202 informs the task q identification information and the power consumption of the resource r to the priority determining means 203 (S315).

After this, the priority determining means 203 registers that resource r power consumption as the power consumption of the resources (q, r) in the resource information on the task q (S316).

In addition, the priority determining means 203 prioritizes the respective tasks in the order of decreasing the values of the following powers P(i) for the task i on the basis of the resources (i = [1 .. m] , [1 .. n(i)]) for the respective tasks and the power consumption (resource (i = [1 .. m], [1 .. n(i)]) (S317).

$$\text{power } P(i) \text{ for task } i = \Sigma \text{ power consumption (resource } (i, j)) \ (\Sigma \text{ signifies } j = 1 \text{ to } n(i))$$

Moreover, the priority determining means 203 informs the task managing means 6 of the determined priority order of the respective tasks (S318), then followed by the termination of the operation (S319).

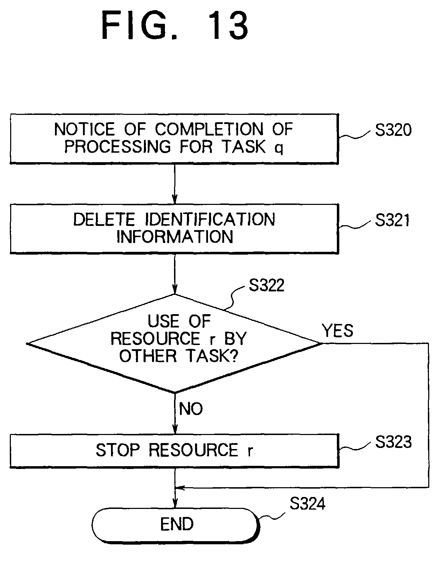

Fig. 13 is a flow chart showing an operation taken for when the resource control means 204 receives the notice on the completion of the processing for the task q. Referring to this drawing, a description will be made of an operation taken for when the notification on the completion of the processing for the task q is given to the resource control means 204 (S320).

The resource control means 204 deletes the identification information on the task q (S321).

Furthermore, the resource control means 204 decides whether or not the other tasks use the resource r (S322), and if being in use, the operation terminates (S324).

If not, the resource control means 204 stops the resource r (S323), and the operation comes to an end (S324).

Incidentally, although in the third embodiment the power consumption of the resource is measured and obtained in S314 of Fig. 12, it is also possible that as in the case of the above-described second embodiment the power consumption of each resource is prepared in advance in the form of a table so that the operation is conducted with reference to this table.

Still further, although at S317 of Fig. 12 the priority order of the respective tasks is made in the order of decreasing the powers P(i) of the tasks i, it is also possible that as well as the above-described second embodiment through the use of a different well-known means for reducing the power consumption the order of processing for the respective tasks are determined so that the power consumption comes to a minimum.

That is, this third embodiment achieves the object similar to that of the second embodiment and further provides the same effects as those of the second embodiment.

Fourth Embodiment

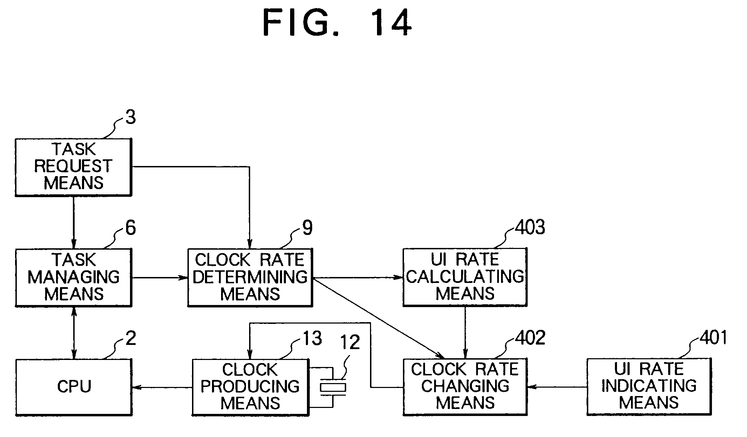

A description will be made hereinbelow of a system arrangement according to a fourth embodiment of the present invention with reference to Fig. 14. Fig. 14 is an illustration of an arrangement of a multitask processing system according to this embodiment, whereby the power saving is achievable. This multitask processing system further includes a different portion in addition to the arrangement of the multitask processing system according to the first embodiment.

In Fig. 14, numeral 401 describes UI rate indication means for undergoing an indication on UI (User Interface) rate from the user, numeral 402 denotes clock rate changing means for changing clock frequency information on the basis of the UI rate, and numeral 403 depicts UI rate calculating means for calculating the actual UI rate on the basis of the information on a task under execution. The other components are the same as those with the corresponding numbers in the above-described embodiments.

If lowering the clock rate in order to reduce the power consumption, the UI rate comes down, which results in making it difficult to satisfy the requirements of the user. Contrary to this, if raising the clock rate, the power consumption rises. On the other hand, even if raising the clock rate to a value exceeding the patience of the user, not only the easy-to-use is not improved, but also the power consumption increases. Besides, in addition to the UI processing, the CPU power for the task processing always varies, and hence the responsiveness of the UI varies even at the same clock rate. Accordingly, difficulty is encountered to unconditionally specify the clock rate. In this instance, the user designates the UI to try to always attain the optimal clock rate within its range.

Secondly, a description will be taken hereinbelow of an operation thereof.

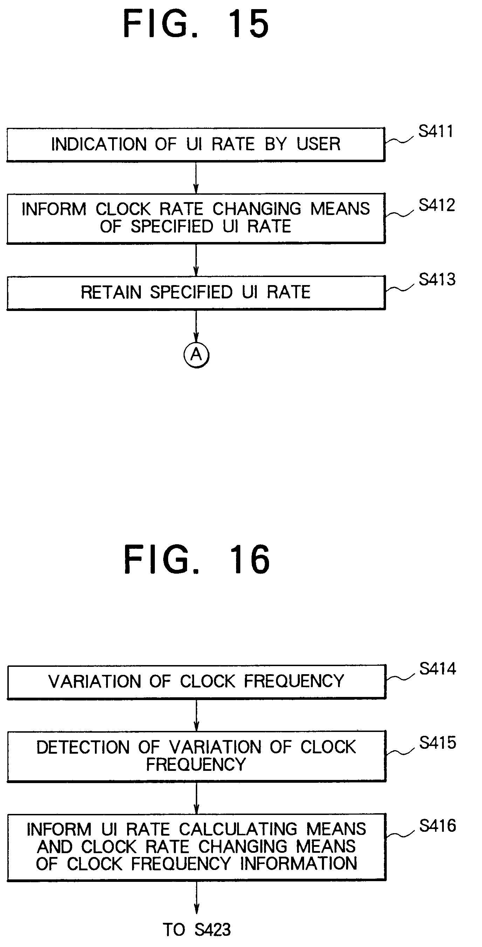

Fig. 15 is a flow chart showing the processing taken for when the user designates the UI rate. Referring to this drawing, a description will be made of an operation taken for when the user designates the UI rate (S411).

The UI rate indication means 401 informs the clock rate changing means 402 of the "specified UI rate" from the user (S412).

Subsequently, the clock rate changing means 402 retains the "specified UI speed" it receives (S413).

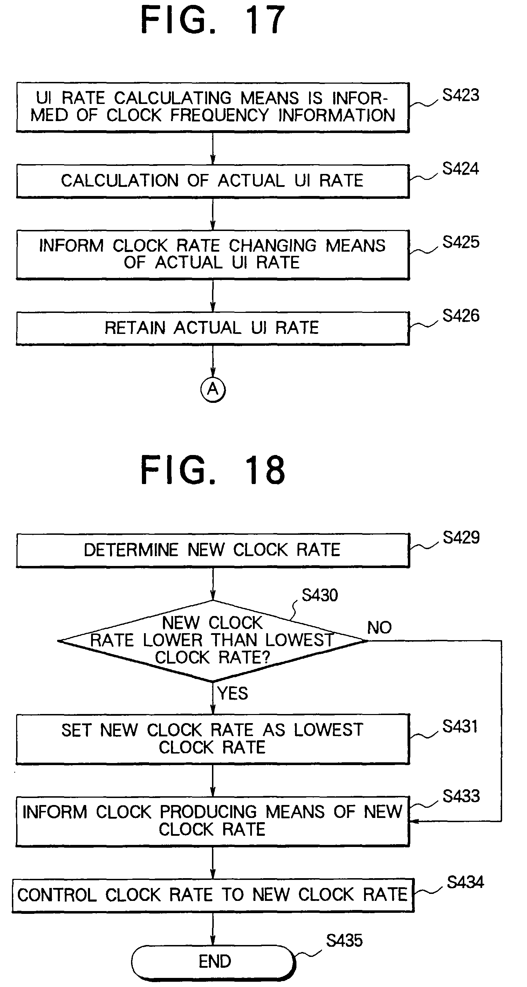

Thereafter, the processing begins with a step S429 following character A enclosed by a circle in Fig. 18.

Fig. 16 is a flow chart showing an operation taken at the variation of the clock frequency. Referring to this drawing, a description will be made of an operation taken for when the clock frequency comes into change (S414).

The clock rate determining means 9 detects the fact that the clock frequency varies (S415).

Furthermore, the clock rate determining means 9 informs the UI rate calculating means 403 and the clock rate changing means 402 of the clock frequency information after the variation (S416). After this, S423 of Fig. 17 is put into execution.

Fig. 17 is a flow chart showing an operation taken for when the clock rate determining means 9 informs the UI rate calculating means 403 of the information on the clock frequency after the variation. Referring to this drawing, a description will be mande hereinbelow of an operation taken for when the clock rate determining means 9 informs the UI rate calculating means 403 of the information on the clock frequency after the variation (S423).

S423 of Fig. 17 signifies the result of the processing in S416 of Fig. 16, that is, the same as S416. For this reason, the following processing proceed from S416.

The UI rate calculating means 403 calculates the actual UI rate the user takes on the body sensation on the basis of the clock frequency information it receives (S424).

Furthermore, the UI rate calculating means 403 gives the calculated UI rate as the "actual UI rate" to the clock rate changing means 402 (S425).

Still further, the clock rate changing means 402 retains the "actual UI rate" it receives (S426). After this, the operation advances from S429 of Fig. 18.

Fig. 18 is a flow chart showing an operation for determining the clock rate in the multitask processing system. Referring to this drawing, a description will be made of an operation by which the clock rate is determined for the multitask processing system.

The clock rate changing means 402 retains the clock frequency information from the clock rate determining means 9 as the lowest clock rate, and determines "new clock rate" being the next clock rate in the multitask processing system as follows on the basis of that "lowest clock rate", "actual UI rate" retained and "specified UI rate" (S429).

$$\text{"new clock rate"} = \text{"lowest clock rate"} * \text{" specified UI rate"} / \text{"actual UI rate"} \qquad \text{(Equation 9)}$$

Subsequently, the clock rate changing means 402 makes a comparison between the determined "new clock rate" and the "lowest clock rate" (S430), and if the "new clock rate" is lower than the "lowest clock rate", sets the "new clock rate" as the "lowest clock rate" (S431). Otherwise, the operation advances to S433.

Furthermore, the clock rate changing means 402 gives the "new clock rate" to the clock producing means 13 (S433).

Following this, the clock producing means 13 controls the clock rate to the "new clock rate it" receives (S434), then terminating the processing (S435).

According to this fourth embodiment, the clock rate (system clock) is made as low as possible to reduce the power consumption while preventing the user from being displeased at the response speed of UI, thus realizing the improvement in easy-to-use.

Fifth Embodiment

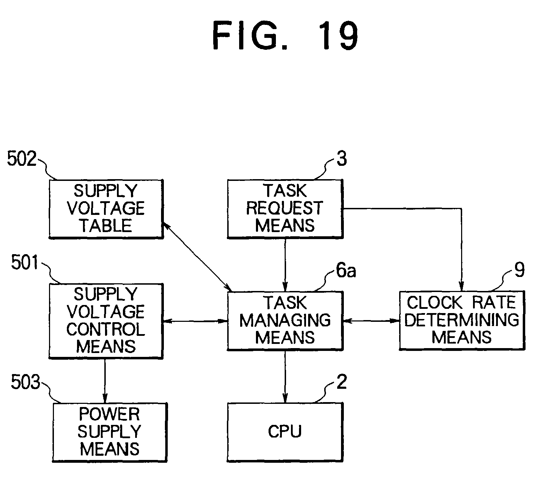

Referring to Fig. 19, a description will be made hereinbelow of an arrangement of a multitask processing system according to a fifth embodiment of the present invention. In the illustration, numeral 501 shows supply voltage control means for controlling an operating voltage of a portable terminal (multitask processing system), numeral 502 depicts a supply voltage table which previously stores information on the task execution time corresponding to a supply voltage at every system clock for a task subjected to the execution request, and numeral 503 denotes power supply means having a function to supply the supply voltage controlled through the supply voltage control means 501. Incidentally, the task managing means 6a in this fifth embodiment is made to be superior in function to the task managing means 6 in the above-mentioned first embodiment.

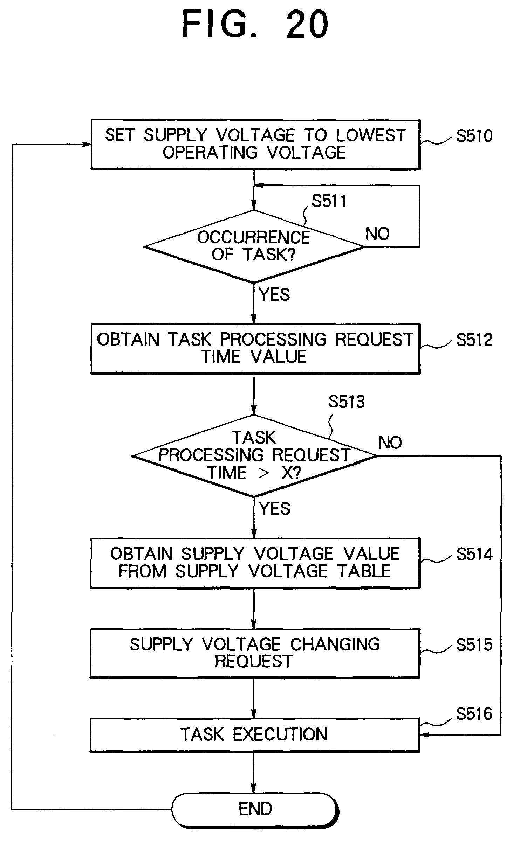

Fig. 20 is a flow chart showing an operation taken for when a task to be executed occurs in the portable terminal. An operation of the system according to this embodiment will be described with reference to this drawing.

In the initial condition, the task managing means 6 sets the voltage value to the lowest operating voltage with respect to the supply voltage control means 501 (S510). The lowest operating voltage signifies a voltage without troubles when no task occurs, that is, when only task waiting loop processing is in execution.

When the task request means 3 makes a request for the execution of one task to the task managing means 6a, the task managing means 6a knows the task processing request time for the processing of that task referring to the request time register 14 of the clock rate determining means 9 (S512).

After the issue of the voltage changing instruction from the task managing means 6a to the supply voltage control means 501, the time taken until the supply voltage from the power supply means 503 gets into a stable condition is taken to be X. In the case of the common power supply means 503, this time X is several ms.

The task managing means 6a makes a comparison in length between the task processing request time known in S512 and the above-mentioned time X (S513).

When the task processing request time is shorter than the time X, that is, in the case that, if the task managing means 6a makes a request for the change of the supply voltage to the supply voltage control means 501, the processing of the task under the execution request is completed before the voltage value of the power supply from the power supply means 503 is changed and becomes stable so that the supply voltage change produces no effects, the task managing means 6a does not issue the request for the change of the supply voltage to the supply voltage control means 501 but issuing a task execution instruction to the CPU 2, so that the task comes into execution (S516).

On the other hand, when the answer of S513 shows that the task processing request time is longer than the time X, that is, in the case that the task managing means 6a makes a request for the change of the supply voltage to the supply voltage control means 501 and the task under the execution request is processed at this supply voltage, the task managing means 6a determines an appropriate supply voltage referring to the supply voltage table 502 so that the task requested is finished within the request time (S514).

The supply voltage table 502 stores the supply voltage and the task execution time corresponding to the system clock at every task. Thus, if referring to this table, it is possible to know how to lower the supply voltage so that the task execution time comes to within the task processing request time.

Subsequently, the task managing means 6a makes a request for the change of the supply voltage to the supply voltage control means 501, while the supply voltage control means 501 controls the power supply means 503 to supply a power with a given voltage value to the system. On the other hand, the supply voltage control means 501 returns a task execution permission instruction to the task managing means 6a (S515).

Then, the task managing means 6a executes the task in response to the task execution permission instruction from the supply voltage control means 501 (S516).

In general, an electronic device consumes power in proportion to the square of the operating voltage from the following equation 10.

$$P = V^2/R \qquad \text{(Equation 10)}$$

where P represents a power consumption, V depicts a supply voltage and R denotes a resistance.

That is, suppressing the supply voltage to the necessary minimum has the effect on the saving of the power to be consumed.

Sixth Embodiment

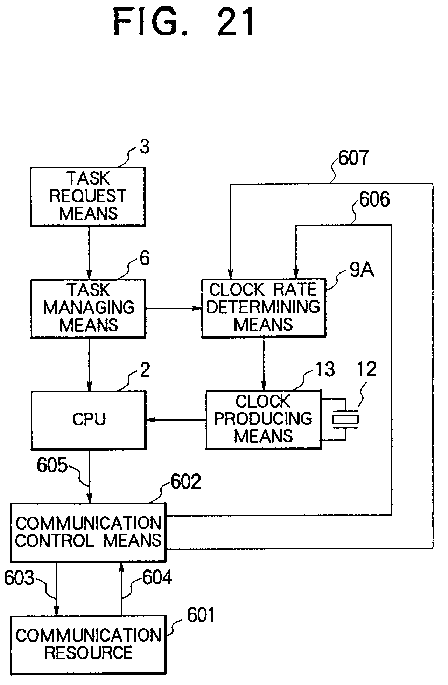

Fig. 21 illustrates an arrangement of a multitask processing system according to a sixth embodiment of the present invention, which is capable of achieving the power saving.

In the illustration, numeral 9A represents clock rate determining means, numeral 601 depicts a communication resource for actually making a communication with a different system, and numeral 602 signifies communication control means for controlling and managing the communication resource.

In addition, in the same illustration, numeral 603 indicates a communication resource initializing instruction the communication control means 602 sends to the communication resource 601, numeral 604 stands for communication error information to be delivered to the communication control means 602 when an communication error occurs in the communication resource 601, numeral 605 represents a communication request issued from the CPU 2, numeral 606 designates communication mode information to be sent from the communication control means 602 to the clock rate determining means 9A, and numeral 607 shows clock-up request information to be sent from the communication control means 602 to the clock rate determining means 9A. The other components are the same as the corresponding ones in the other embodiments.

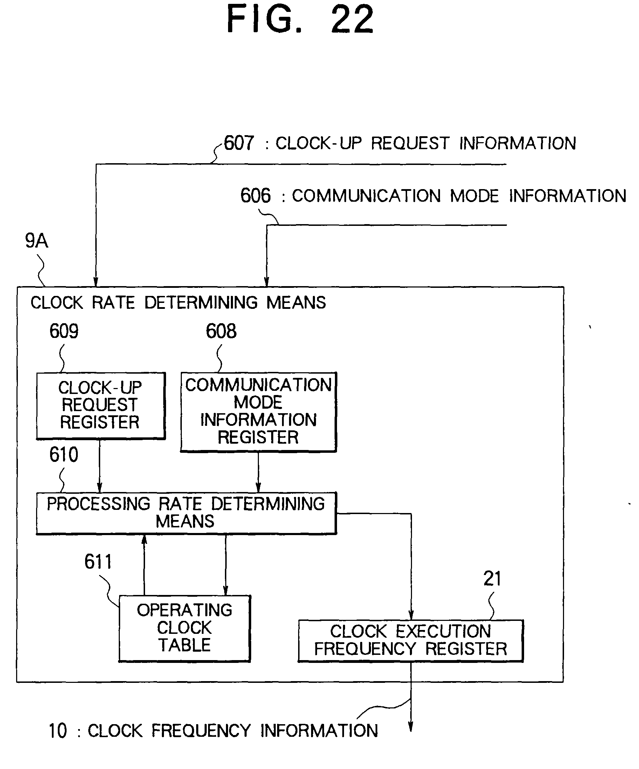

Fig. 22 is a block diagram showing a detailed arrangement of the clock rate determining means 9A. In the illustration, numeral 608 represents a communication mode information register for storing the communication mode information 606 delivered from the communication control means 602, numeral 609 describes a clock-up request register for storing the clock-up request information 607 sent from the communication control means 602, numeral 610 depicts processing rate determining means for determining an operating clock (system clock) of the multitask processing system at communication, and numeral 611 denotes an operating clock table for storing the lowest rate CPU operating clock information corresponding to the communication speed which allows the normal communication.

Secondly, referring to Figs. 21 and 22, a description will be made hereinbelow of an operation of the system according to this embodiment.

In cases where the communication request 605 is made by the CPU 2, the communication control means 602 receives the communication request 605 and sends the communication resource initializing instruction 603 to the communication resource 601 to initialize the communication resource 601. At the same time, the communication control means 602 communicates to the clock rate determining means 9A the fact that this multitask processing system is in a communication state and the present communication mode information 606.

The clock rate determining means 9A puts the communication mode information 606 in the communication mode information register 608. In addition, the clock rate determining means 610 derives the value of the operating clock corresponding to the contents of the communication mode information register 608 from the operating clock table 611 and confirms that no clock-up request information is stored in the clock-up request register 609 and sends operating clock determination information to the clock execution frequency register 21 to set the operating clock for this system, so that the operating clock of this system is modified to the lowest rate value corresponding to the communication speed.

Furthermore, in case that a communication error occurs during the communication, the communication resource 601 sends the communication error information 604 to the communication control means 602. The communication control means 602 forwards the clock-up request information 607 to the clock rate determining means 9A in order to eliminate the communication error.

The clock rate determining means 9A stores the clock-up request information 607 in the clock-up request register 609. Further, the processing rate determining means 610 picks up the operating clock value corresponding to the contents of the communication mode information register 608 from the operating clock table 611 and, in response to the request in the clock-up request register 609, makes a determination of speeding up the operating clock of this system by one rank and forwards the operating clock determination information to the clock execution frequency register 21, with the result that the operating clock of this system changes. Simultaneously, the processing rate determining means 610 changes the information of the operating clock table 611 to the aforesaid value.

Still further, in cases where the communication error does not occur at the communication for a given period of time, the processing rate determining means 610 determines a determination of slowing down the operating clock by one rank in order to lessen the power consumption in this system and forwards the operating clock determination information to the clock execution frequency register 21 to alter the operating clock of this system. Concurrently, the processing rate determining means 610 also changes the information in the operating clock table 611.

Thus, the CPU 2 can execute the processing at the lowest rate operating clock even in the communication condition.

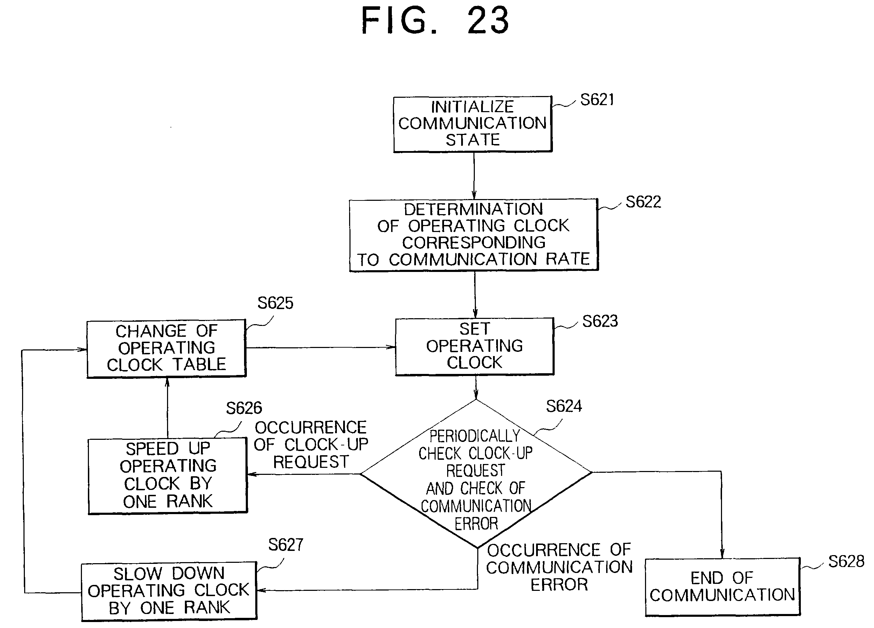

Fig. 23 is a flow chart showing an operation of the clock rate determining means of this system when being in the communication state.

When the CPU 2 in Fig. 21 makes the communication request 605, the communication control means 602 initializes the communication state for starting the communication (S621).

Subsequently, the processing rate determining means 610 of the clock rate determining means 9A determines the operating clock corresponding to the communication mode and the communication speed (the lowest rate operating clock value of the CPU which can realize that communication speed) (S622) and sets that operating clock (S623).

Following this, the processing rate determining means 610 of the clock rate determining means 9A monitors the occurrence of no occurrence of the communication error (S624), and if the clock-up request is made, makes a determination of speeding up the operating clock by one rank (S626) and conducts the change of the operating clock table 611 (S625) and the setting of the operating clock (S623).

Furthermore, in the case that no communication error occurs for a given period of time and no clock-up request is also made, the processing rate determining means 610 of the clock rate determining means 9A makes a determination of slowing down the operating clock by one rank (S627) and further performs the change of the operating clock table 611 (S625) and the setting of the operating clock (S623). The operations from S623 to S624 are repeatedly done until the completion of the communication (S628).

With this arrangement, even if being in communication with the other equipment, it is possible to operate the system at the lowest rate operating clock while maintaining the communication quality, thus accomplishing the reduction of the power consumption.

**Claims**

1. A multitask processing system comprising:

   task request means for issuing a task request when a task to be executed occurs in said system, and further for communicating task processing request time information depending upon said task to be executed;
   task managing means for managing the order of task processing to be conducted by a CPU, and further for issuing task managing information;
   clock rate determining means for determining a low-rate and optimal clock frequency on the basis of said task processing request time information and said task managing information; and
   clock producing means for producing a clock signal corresponding to said clock frequency, and further for supplying said clock signal to said CPU.

2. The multitask processing system according to claim 1, wherein said clock rate determining means is equipped with a clock frequency table for storing a plurality of clock frequencies, and determines said low-rate and optimal clock frequency using said clock frequency table on the basis of said task processing request time information and said task managing information.

3. The multitask processing system according to claim 2, wherein said task managing information includes the number of tasks and processing contents of tasks, and said clock rate determining means obtains a request time for each task on the basis of said task processing request time information and calculates an execution time for each task on the basis of said number of tasks, said processing contents of tasks and said clock frequencies stored in said clock frequency table and further determines said low-rate and optimal clock frequency using said clock frequency table on the basis of said request time and said execution time.

4. The multitask processing system according to claim 3, wherein said clock rate determining means makes a comparison between said request time and said execution time to determine the lowest clock frequency when said execution time satisfies said request time.

5. The multitask processing system according to claim 1, further comprising clock rate changing means for changing a clock frequency determined by said clock rate determining means on the basis of a specified UI rate specified by a user.

**6.** The multitask processing system according to claim 5, further comprising UI rate calculating means for calculating, on the basis of a clock frequency determined by said clock rate determining means, an actual UI rate a user takes on his body sensation, said clock rate changing means changing said clock frequency and over a range of said clock frequency determined by said clock rate determining means on the basis of said specified UI rate, said clock frequency determined by said clock rate determining means and said actual UI rate.

**7.** The multitask processing system according to claim 1, further comprising:

used resource decision means for deciding a resource used for a task on the basis of task processing contents coming from said task managing means;
power consumption calculating means for calculating a power consumption of said resource; and
priority determining means for determining a priority of a task on the basis of said resource and the calculated power consumption of said resource and for communicating the determined priority to said task managing means.

**8.** The multitask processing system according to claim 7, wherein said priority determining means attains powers for tasks on the basis of said resource and said power consumption of said resource and determines priority levels of said tasks in the order of decreasing power.

**9.** The multitask processing system according to claim 1, further comprising:

resource control means for controlling a resource and for communicating identification information on a task and a resource operating instruction;
power consumption calculating means for calculating a power consumption of said resource; and
priority determining means for determining a priority of a task on the basis of said resource and the calculated power consumption of said resource and for informing the determined priority to said task managing means.

**10.** The multitask processing system according to claim 9, wherein said priority determining means obtains a power for a task on the basis of said resource and said power consumption of said resource and determines priority levels of tasks in the order of decreasing power.

**11.** A multitask processing system comprising:

task request means for issuing a task request when a task to be executed occurs in said system and further for communicating task processing request time information depending upon said task to be executed;
task managing means for managing the order of task processing to be conducted by a CPU and for issuing task managing information;
clock rate determining means for storing a request time for each task in a request time register on the basis of said task processing request time information and said task managing information;
supply voltage table for storing a task execution time to a system clock and a supply voltage at every task; and
supply voltage control means for controlling a supply voltage for said system,
wherein, in response to the issue of said task request, said task managing means makes a request for change of said system supply voltage to said supply voltage control means referring to said request time register, said supply voltage table, and a stabilization time taken until said supply voltage stably lies at a given value.

**12.** The multitask processing system according to claim 11, wherein, when a request time for a task on said task request is longer than said stabilization time, said task managing means obtains a supply voltage so that an execution time for said task on said task request is within said request time and makes a request for change of said system supply voltage to said supply voltage control means.

**13.** A multitask processing system comprising:

task request means for issuing a task request when a task to be executed occurs in said system;
task managing means for managing the order of task processing to be conducted by a CPU and for issuing task managing information;
communication control means for controlling and managing a communication resource and for producing communication state information;
clock rate determining means for determining a low-rate and optimal clock frequency in accordance with said communication state information; and

clock producing means for producing a clock signal corresponding to said clock frequency and for supplying said clock signal to said CPU.

14. The multitask processing system according to claim 13, wherein, when said CPU makes a communication request, said communication control means informs said clock rate determining means of the present communication mode information as said communication state information, and said clock rate determining means has an operating clock table storing lowest-rate CPU clock frequency information corresponding to a communication speed for normal communication and determines a clock frequency corresponding to said communication mode information through the use of said operating clock table.

15. The multitask processing system according to claim 14, wherein said communication control means informs said clock rate determining means of clock-up request information as said communication state information when receiving communication error information from said communication resource, and said clock rate determining means speeds up the determined clock frequency by one rank when receiving said clock-up request information.

16. The multitask processing system according to claim 14, wherein said clock rate determining means slows down the determined clock frequency by one rank when no communication error occurs for a given period of time during communication.

# FIG. 1

MULTITASK PROCESSING SYSTEM

TASK REQUEST MEANS — 3

5 TASK PROCESSING REQUEST TIME INFORMATION

4 — TASK REQUEST

6 TASK MANAGING INFORMATION

TASK MANAGING MEANS

8

CLOCK RATE DETERMINING MEANS — 9

7 — EXECUTION TASK

13

10 CLOCK FREQUENCY INFORMATION

CPU — 2

11

CLOCK SIGNAL

CLOCK PRODUCING MEANS

12 OSCILLATOR

1

EP 0 794 481 A2

# FIG. 2

EP 0 794 481 A2

EP 0 794 481 A2

# FIG. 3

S101 — STORE INITIAL VALUE (LOWEST-RATE FREQUENCY) IN CLOCK FREQUENCY REGISTER 20 AND CLOCK EXECUTION FREQUENCY REGISTER 21

S113 — COMPARISON BETWEEN VALUE OF CLOCK FREQUENCY REGISTER AND VALUE OF CLOCK EXECUTION FREQUENCY REGISTER

COINCIDENCE

NO COINCIDENCE

S102 — TASK MANAGING INFORMATION RECEIVED?

NO

YES

S103 — SPECIFY TASK a,b,c . . .

S104 — CALCULATE EXECUTION TIME AND STORE IT IN EXECUTION TIME REGISTER 22

S108 — INCREASE VALUE OF CLOCK FREQUENCY REGISTER BY ONE

S105 — COMPARE WITH REQUEST TIME

REQUEST TIME < EXECUTION TIME . . . 1

REQUEST TIME > EXECUTION TIME . . . 0

S106 — f IS MINIMUM VALUE?

NO

YES

S109 — ALL TASKS COMPLETED?

NO

YES

S107 — COPY VALUE OF CLOCK FREQUENCY REGISTER 20 INTO CLOCK EXECUTION FREQUENCY REGISTER 21

S110 — COPY VALUE OF CLOCK FREQUENCY REGISTER 20 INTO CLOCK EXECUTION FREQUENCY REGISTER 21

S111 — f IS MININUN VALUE?

NO

YES

S112 — DECREASE VALUE OF CLOCK FREQUENCY REGISTER BY ONE

19

# FIG. 4

# FIG. 5

| | |
|---|---|
| ISSUE OF TASK i EXECUTION REQUEST | S211 |
| GIVE NOTICE ON TASK i REQUEST | S212 |
| OBTAIN PROCESSING CONTENTS (i) | S213 |
| IFORM USED RESOURCE DECISION MEANS OF PROCESSING CONTENTS (i) | S215 |
| OBTAIN RESOUCE (i, [1 .. n(i)]) TO BE USED | S216 |
| INFORM POWER CONSUMPTION CALCULATING MEANS OF EACH RESOURCE | S217 |
| OBTAIN POWER CONSUMPTION OF EACH RESOURCE | S218 |
| INFORM PRIORITY DETERMINING MEANS OF EACH RESOUCE AND POWER CONSUMPTION | S219 |
| REGISTER EACH RESOURCE AND POWER CONSUMPTION | S220 |
| DETERMINE PRIORITY OF TASK | S221 |
| INFORM TASK MANAGING MEANS OF PRIORITY | S222 |
| END | S223 |

# FIG. 6

OCCURRENCE OF REGULAR INTERRUPTION PROCESSING — S224

BREAK EXECUTION OF TASK k(t−1) — S225

DETERMINE TASK k(t) TO BE EXECUTED NEXT — S226

INFORM CPU OF PROCESSING CONTENTS FOR TASK k(t) AND EXECUTION INSTRUCTION — S227

EXECUTE TASK k(t) — S228

END — S229

# FIG. 7

PROCESSING FOR TASK k(t−1) UNDER EXECUTION COMPLETED — S230

INFORM RESOURCE CONTROL MEANS OF COMPLETION OF PROCESSING FOR TASK k(t−1) — S231

INFORM TASK MANAGING MEANS OF COMPLETION OF PROCESSING FOR TASK k(t−1) — S232

INFORM PRIORITY DETERMINING MEANS OF COMPLETION OF PROCESSING FOR TASK k(t−1) — S233

DELETE RESOURCE INFORMATION ON TASK k(t−1) — S234

END — S235

# FIG. 8

USE OF RESOURCE r BY CPU — S236

↓

INFORM RESOURCE CONTROL MEANS OF IDENTIFICATION INFORMATION AND OPERATION INSTRUCTION — S237

↓

S238
IDENTIFICATION INFORMATION REGISTERED? — YES

NO
↓

REGISTER IDENTIFICATION INFORMATION ON TASK q — S239

↓

S240
RESOURCE r IN OPERATION? — YES

NO
↓

OPERATE RESOURCE r — S241

↓

END — S242

# FIG. 9

```
┌─────────────────────────────────┐
│   NOTICE OF COMPLETION OF        │──── S243
│ PROCESSING FOR TASK IS GIVEN     │
└─────────────────────────────────┘
                │
                ▼
┌─────────────────────────────────┐
│     DELETE IDENTIFICATION        │──── S244
│         INFORMATION              │
└─────────────────────────────────┘
                │
                ▼  S245
           ╱─────────╲
         ╱             ╲
        ╱ USE OF RESOURCE r ╲   YES
        ╲  BY OTHER TASK?   ╱──────┐
         ╲                 ╱        │
           ╲─────────────╱          │
                │ NO                │
                ▼                   │
┌─────────────────────────────────┐│
│        STOP RESOURCE r           │──── S246
└─────────────────────────────────┘│
                │                   │
                ◄───────────────────┘
                ▼
           ╭──────────╮  S247
           │   END    │
           ╰──────────╯
```

# FIG. 10

EP 0 794 481 A2

# FIG. 11

ISSUE OF TASK i EXECUTION REQUEST — S301

NOTICE OF TASK i REQUEST — S302

OBTAIN PROCESSING CONTENTS (i) — S303

SET PRIORITY OF TASK i TO MIDDLE LEVEL — S305

END — S306

# FIG. 12

USE OF RESOURCE r BY CPU — S307

INFORM RESOURCE CONTROL MEANS OF IDENTIFICATION INFORMATION AND OPERATION INSTRUCTION — S308

IDENTIFICATION INFORMATION REGISTERED? — S309

YES

NO

REGISTER IDENTIFICATION INFORMATION — S310

RESOURCE r IN OPERATION? — S311

YES

NO

OPERATE RESOURCE r — S312

INFORM POWER CONSUMPTION CALCULATING MEANS OF INDENTIFICATION INFORMATION AND OPERATION OF RESOURCE — S313

OBTAIN POWER CONSUMPTION — S314

INFORM PRIORITY DETERMININGM MEANS OF IDENTIFICATION INFORMATION AND POWER CONSUMPTION — S315

REGISTER POWER CONSUMPTION — S316

DETERMINE PRIORITY OF TASK — S317

INFORM TASK MANAGING MEANS OF PRIORITY — S318

END — S319

# FIG. 13

```
┌─────────────────────────────┐
│  NOTICE OF COMPLETION OF     │ ── S320
│  PROCESSING FOR TASK q       │
└─────────────────────────────┘
              │
              ▼
┌─────────────────────────────┐
│  DELETE IDENTIFICATION       │ ── S321
│  INFORMATION                 │
└─────────────────────────────┘
              │
              ▼  ── S322
          ◇─────────◇
         ╱  USE OF   ╲           YES
        ◇ RESOURCE r BY ◇ ───────────┐
         ╲ OTHER TASK? ╱             │
          ◇─────────◇               │
              │ NO                   │
              ▼                      │
┌─────────────────────────────┐     │
│      STOP RESOURCE r         │ ── S323
└─────────────────────────────┘     │
              │                      │
              ▼◄────────────────────┘
           ╭──────╮  ── S324
           │ END  │
           ╰──────╯
```

# FIG. 14

TASK REQUEST MEANS — 3

TASK MANAGING MEANS — 6

CPU — 2

CLOCK RATE DETERMINING MEANS — 9

CLOCK PRODUCING MEANS — 13, 12

UI RATE CALCULATING MEANS — 403

CLOCK RATE CHANGING MEANS — 402

UI RATE INDICATING MEANS — 401

# FIG. 15

| INDICATION OF UI RATE BY USER | S411 |

↓

| INFORM CLOCK RATE CHANGING MEANS<br>OF SPECIFIED UI RATE | S412 |

↓

| RETAIN SPECIFIED UI RATE | S413 |

↓

(A)

# FIG. 16

| VARIATION OF CLOCK FREQUENCY | S414 |

↓

| DETECTION OF VARIATION OF CLOCK<br>FREQUENCY | S415 |

↓

| INFORM UI RATE CALCULATING MEANS<br>AND CLOCK RATE CHANGING MEANS<br>OF CLOCK FREQUENCY INFORMATION | S416 |

↓

TO S423

# FIG. 17

UI RATE CALCULATING MEANS IS INFOR-MED OF CLOCK FREQUENCY INFORMATION — S423

CALCULATION OF ACTUAL UI RATE — S424

INFORM CLOCK RATE CHANGING MEANS OF ACTUAL UI RATE — S425

RETAIN ACTUAL UI RATE — S426

Ⓐ

# FIG. 18

DETERMINE NEW CLOCK RATE — S429

NEW CLOCK RATE LOWER THAN LOWEST CLOCK RATE? — S430

NO

YES

SET NEW CLOCK RATE AS LOWEST CLOCK RATE — S431

INFORM CLOCK PRODUCING MEANS OF NEW CLOCK RATE — S433

CONTROL CLOCK RATE TO NEW CLOCK RATE — S434

END — S435

# FIG. 19

# FIG. 20

SET SUPPLY VOLTAGE TO LOWEST OPERATING VOLTAGE — S510

S511

OCCURRENCE OF TASK? — NO

YES

OBTAIN TASK PROCESSING REQUEST TIME VALUE — S512

S513

TASK PROCESSING REQUEST TIME > X? — NO

YES

OBTAIN SUPPLY VOLTAGE VALUE FROM SUPPLY VOLTAGE TABLE — S514

SUPPLY VOLTAGE CHANGING REQUEST — S515

S516

TASK EXECUTION

END

# FIG. 21

```
        ┌──────────┐ 3                              ┌607
        │   TASK   │                  ┌──────────────┘
        │ REQUEST  │                  │        ┌606
        │  MEANS   │                  │   ┌─────┘
        └────┬─────┘                  │   │
             │                        │   │
             ▼          6             ▼   ▼         9A
        ┌──────────┐                 ┌──────────────┐
        │   TASK   │                 │  CLOCK RATE  │
        │ MANAGING │────────────────▶│ DETERMINING  │
        │  MEANS   │                 │    MEANS     │
        └────┬─────┘                 └──────┬───────┘
             │                              │
             │          2                   ▼    13    12
             ▼                         ┌──────────┐
        ┌──────────┐                   │  CLOCK   │  ┌┐
        │          │                   │PRODUCING │  ││
        │   CPU    │◀──────────────────│  MEANS   │  └┘
        │          │                   └──────────┘
        └────┬─────┘
      605    │
         ╲   │              ┌602
          ╲  ▼          ┌───┘
        ┌─────────────────────┐
        │   COMMUNICATION     │──────────────────────────
        │  CONTROL  MEANS     │
        └──────┬───────▲──────┘
     603       │       │   604
        ╲      │       │  ╱
         ╲     ▼       │ ╱       601
        ┌─────────────────────┐ ╱
        │   COMMUNICATION     │
        │     RESOURCE        │
        └─────────────────────┘
```

# FIG. 22

607 : CLOCK-UP REQUEST INFORMATION

606 : COMMUNICATION MODE INFORMATION

9A

**CLOCK RATE DETERMINING MEANS**

609

608

| CLOCK-UP REQUEST REGISTER | COMMUNICATION MODE INFORMATION REGISTER |

610

PROCESSING RATE DETERMINING MEANS

611

| OPERATING CLOCK TABLE | CLOCK EXECUTION FREQUENCY REGISTER |

21

10 : CLOCK FREQUENCY INFORMATION

# FIG. 23

INITIALIZE COMMUNICATION STATE — S621

DETERMINATION OF OPERATING CLOCK CORRESPONDING TO COMMUNICATION RATE — S622

CHANGE OF OPERATING CLOCK TABLE — S625

SET OPERATING CLOCK — S623

SPEED UP OPERATING CLOCK BY ONE RANK — S626

OCCURRENCE OF CLOCK-UP REQUEST

PERIODICALLY CHECK CLOCK-UP REQUEST AND CHECK OF COMMUNICATION ERROR — S624

SLOW DOWN OPERATING CLOCK BY ONE RANK — S627

OCCURRENCE OF COMMUNICATION ERROR

END OF COMMUNICATION — S628

EP 0 794 481 A2

# FIG. 24
## PRIOR ART

1A — SERVICE MACRO SECTION

2A — INTERRUPTION SERVICE MACRO SECTION

3A — SCHEDULER SECTION

31 — PRESENCE OF TASK BEING IN READY OR RUNNING STATE?

YES

NO

32 — SET CORRESPONDING TASK INTO RUNNING STATE

41 — PRESENTLY IN OPERATION WITH HIGH-RATE CLOCK?

NO

YES

42 — SWITCH FROM HIGH-RATE CLOCK TO LOW-RATE CLOCK

LOW-RATE CLOCK

33 — CLOCK SETTING IN TDB?

HIGH-RATE CLOCK

61

61A

62

62A

HALT

4A — CLOCK SWITCHING SECTION

45 — PRESENTLY IN OPERATION WITH HIGH-RATE CLOCK?

NO

YES

46 — SWITCH FROM HIGH-RATE CLOCK TO LOW-RATE CLOCK

43 — PRESENTLY IN OPERATION WITH LOW-RATE CLOCK?

NO

YES

44 — SWITCH FROM LOW-RATE CLOCK TO HIGH-RATE CLOCK

5A — SETTING OF REGISTER RETURN SP

RET